# EUROPEAN PATENT SPECIFICATION

(11) **EP 3 871 053 B1**
(45) Date of publication and mention of the grant of the patent: **23.07.2025**
(21) Application number: 19795160.1
(22) Date of filing: 23.10.2019
(51) Int. Cl.: G05B 15/02

(54) **A BUILDING MANAGEMENT SYSTEM AND METHOD**
GEBÄUDEVERWALTUNGSSYSTEM UND -VERFAHREN
SYSTÈME ET PROCÉDÉ DE GESTION DE BÂTIMENT

(30) Priority: 23.10.2018 GB 201817201
(43) Date of publication of application: 01.09.2021
(73) Proprietor: Wirth Research Limited, Bicester, Oxfordshire OX26 4LD (GB)
(72) Inventor: WIRTH, Nicholas, Northamptonshire NN12 8TF (GB)
(74) Representative: Haseltine Lake Kempner LLP
(86) International application number: PCT/EP2019/078940
(87) International publication number: WO 2020/084013

(56) References cited:
- US-A1- 2013 190 940
- US-A1- 2015 042 479
- US-A1- 2017 206 615
- US-A1- 2018 218 303

## Description

The invention relates to a building management system and method.

Wind infiltration into buildings through doorways and other openings causes the climate within the building to change. In particular, the air entering the building may have an adverse effect on the temperature and/or humidity within the building which must be controlled and managed by HVAC systems operating within the building. Consequently, the energy consumption of such HVAC systems is increased. The change in climate may also affect other energy consuming components in the building, such as refrigerated cabinets. This can be detrimental to the performance of the energy consuming component, increasing its energy consumption and, in extreme conditions, causing the energy consuming component to fail.

Wind conditions can also be problematic on building sites where excessive wind can mean that certain actions cannot be completed as planned. In particular, cranes may need to be taken out of service when the wind speed exceeds a threshold and this can lead to delays and increased costs.

US2013190940 describes methods and systems for optimizing and controlling the energy consumption of a building in which a set of thermal response coefficients for the building based on energy characteristics of the building and weather data associated with the location of the building are generated.

US2017206615 describes methods and systems for determining a load control schedule for energy control devices using a load shifting optimization model and applying the load control schedule to adjust the energy control devices.

US2015042479 describes an early alert system which comprises a data processing unit and a plurality of monitoring units distributed in a defined area. The data processing unit is configured to receive physical information associated with a fluid from the plurality of monitoring units that are distributed in a defined area; calculate a flow field associated with the fluid within the defined area based on the physical information; predict future physical information associated with the fluid at a target coordinate in the defined area based on the flow field; and send a message associated with the predicted future physical information to a receiver upon receipt of a trigger signal associated with the predicted future physical information.

It is therefore desirable to provide a system and method which allows the operation of at least one energy consuming component in a building to be better controlled and managed.

In accordance with an aspect, there is provided a building management system comprising: a climate simulation module having access to data representing an internal model of a building and data representing an external model of an environment surrounding the building, wherein the internal model includes at least one energy consuming component installed within the building and having a performance characteristic which is influenced by a climate within the building; and a weather forecasting module for supplying predicted weather data for the geographical location of the building to the climate simulation module; wherein the climate simulation module is configured to calculate wind infiltration into the building based on the predicted weather data and the external model and to determine a climate profile within the building based on the wind infiltration into the building and the internal model of the building; wherein the system further comprises a performance analysis module which is configured to predict the performance characteristic of the at least one energy consuming component based on the climate profile and, optionally, to control the at least one energy consuming component based on the predicted performance characteristic.

The weather data may include one or more of: wind speed, wind direction, ambient temperature, humidity and atmospheric pressure.

The climate profile may comprise a temperature profile within the building.

The climate profile may further comprise humidity within the building.

The building management system may further comprise an alert module configured to compare the performance characteristic to a predetermined threshold and to generate an output providing an advanced warning that the performance characteristic will exceed or fall below the threshold at a future time.

The predetermined threshold may be a maximum performance value of the at least one energy consuming component.

The alert module may be configured to automatically perform mitigating action at a predicted time when the performance characteristic is determined to exceed the maximum performance value.

The alert module may be configured to disable the at least one energy consuming component at a predicted time when the performance characteristic is determined to exceed the maximum performance value.

The at least one energy consuming component may comprise at least one HVACR component.

The performance characteristic may comprise an energy consumption, a cooling load or a heating load of the at least one HVACR component.

The at least one HVACR component may be a refrigerated display case and/or components of a HVAC system installed in the building.

The internal model of the building may include settings of the at least one HVACR component which contribute to the climate profile.

The building management system may further comprise a communications module which transmits the performance characteristic and/or output from the alert module to a recipient.

The recipient may be an energy supplier of the building and/or a maintenance provider. The internal model and/or external model may comprise or be based on a CFD model (i.e. a numerical model; including a reduced order model based on a CFD model). The climate simulation module may utilise footfall data when calculating wind infiltration into the building.

In accordance with another aspect, there is provided a method of managing the operation of at least one energy consuming component in a building, the method comprising: calculating wind infiltration into the building based on predicted weather data for the geographical location of the building and an external model of the environment surrounding the building; determining a climate profile within the building based on the wind infiltration into the building and an internal model of the building; and predicting a performance characteristic of the at least one energy consuming component based on the climate profile.

The method may further comprise controlling the operation of the at least one energy consuming component based on the performance characteristic.

The various elements described herein, such as an electronic display, memory units, online databases and one or more processors, may be coupled to one another via a wireless link and may consequently comprise transceiver circuitry and one or more antennas. Additionally or alternatively, the elements described herein may be coupled to one another via a wired link and may consequently comprise interface circuitry (such as a Universal Serial Bus (USB) socket). It should be appreciated that the elements described herein may be coupled to one another via any combination of wired and/or wireless links.

The system (and various associated elements) described herein may comprise any suitable circuitry to cause performance of the methods described herein and as illustrated in the Figures. The system may comprise: at least one application specific integrated circuit (ASIC); and/or at least one field programmable gate array (FPGA); and/or single or multi-processor architectures; and/or sequential (Von Neumann)/parallel architectures; and/or at least one programmable logic controllers (PLCs); and/or at least one microprocessor; and/or at least one microcontroller; and/or a central processing unit (CPU); and/or a graphics processing unit (GPU).

The system may comprise and/or be in communication with one or more memories that store the data described herein, and/or that store software for performing the processes described herein.

The memory may be any suitable non-transitory computer readable storage medium, data storage device or devices, and may comprise a hard disk and/or solid state memory (such as flash memory). The memory may be permanent non-removable memory, or may be removable memory (such as a universal serial bus (USB) flash drive).

The memory may store a computer program comprising computer readable instructions that, when read by a processor, causes performance of the methods described herein, and as illustrated in the Figures. The computer program may be software or firmware, or may be a combination of software and firmware.

The computer readable storage medium may be, for example, a USB flash drive, a compact disc (CD), a digital versatile disc (DVD) or a Blu-ray disc. In some examples, the computer readable instructions may be transferred to the memory via a wireless signal or via a wired signal.

The computing resources (e.g. memory and/or processing functionality) may be accessed via a cloud computing infrastructure.

For a better understanding of the invention, and to show more clearly how it may be carried into effect, reference will now be made, by way of example, to the accompanying drawings, in which:-
Figure 1 is a schematic view of a building management system according to an embodiment of the invention;
Figure 2 shows a 3D model of the interior of a building;
Figure 3 shows a 3D model of an environment surrounding the building;
Figures 4 and 5 show a simulation of wind movement in the vicinity of the building;
Figure 6 shows a simulation of wind infiltration into the building;
Figure 7 shows a simulation of a climate profile within the building;
Figure 8 shows the operational status of a number of refrigerated cabinets in the building with a comparison between simulated data and historic data;
Figure 9 is a flow chart of a method of managing the operation of at least one energy consuming component in a building;
Figure 10 is a schematic view of a building management system according to another embodiment of the invention;
Figure 11 shows a model of an environment surrounding a building site; and
Figure 12 is a flow chart of a method of managing a building site.

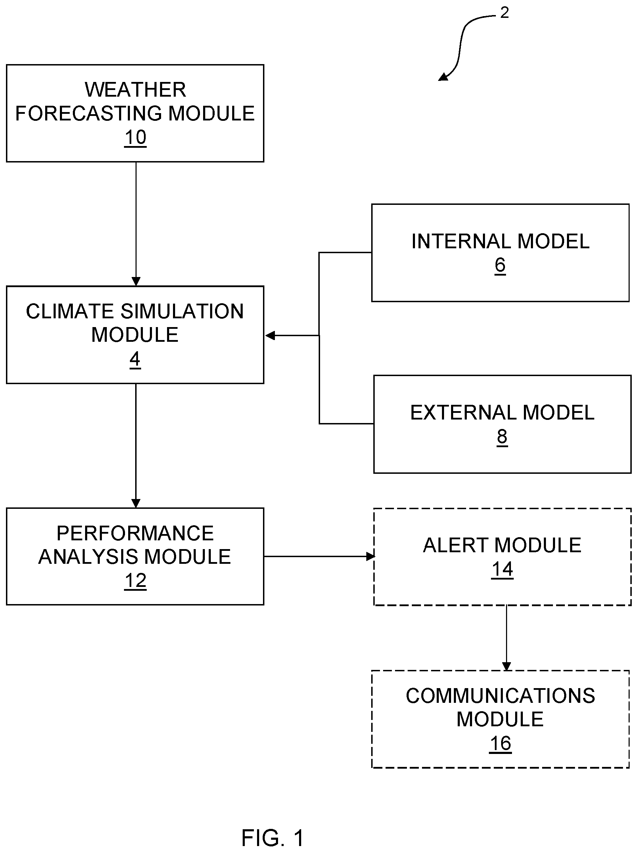

Figure 1 shows a building management system 2 according to an embodiment of the invention. The building management system 2 comprises a climate simulation module 4. The climate simulation module 4 is in communication with a storage medium on which an internal model 6 (or at least data representing an internal model) of a building is stored. The climate simulation module 4 is also in communication with a storage medium (which may be the same storage medium as that described previously) on which an external model 8 (or at least data representing an external model) of an environment surrounding the building is stored.

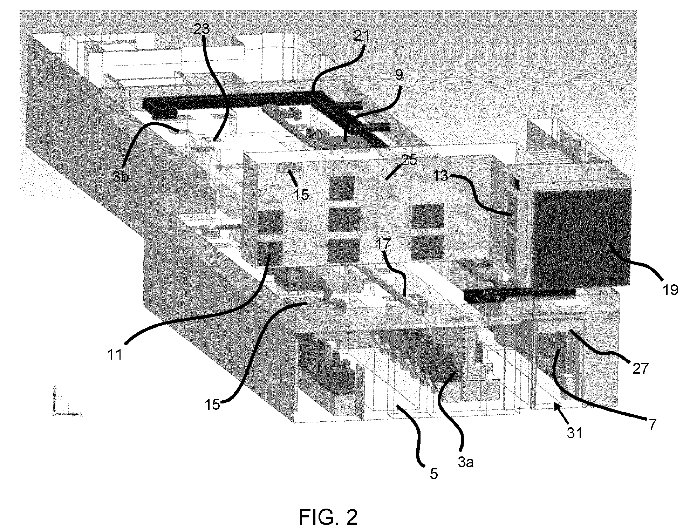

Figure 2 shows an example of an internal model 6 of a building. As shown, the internal model 6 is a 3D CFD (Computational Fluid Dynamics) model (or a Reduced Order Model, based on the results of a CFD model) which may be created from 2D drawings (plans) of the building and/or a survey of the building. The internal model 6 includes not only the structural layout of the building, but also various elements which contribute to fluid flow within the building and the resulting climate (i.e. temperature and/or humidity) profile. In particular, for the example shown, which is a supermarket building, the internal model 6 may, for example, include one or more of the following elements shown in Figure 2:
- Temperature loads, such as cash registers 3a (either staffed or self-service) and lighting 3b;
- Occupancy heat source 5 (i.e. heat generated by customers moving through the aisles);
- Refrigerated cabinets 7 (i.e. display cases; including both open and closed door cabinets)
- Air Conditioning system 9;
- Plant inlets 11 and outlets 13;
- Air Handling Unit supply 15;
- Bakery extraction 17;
- Plant inlet/outlet grilles 19;
- Air-cooled cabinet duct extraction 21;
- Sales extraction grilles 23
- Sensors 25; and
- Door heater 27.

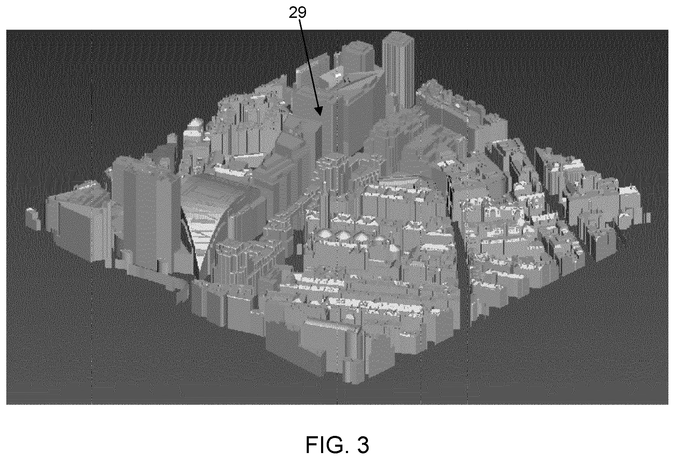

Figure 3 shows an example of an external model 8 of an environment surrounding the specific building 29 which is the subject of the internal model 6. The external model 8 accurately depicts the specific building 29 itself and also surrounding buildings and architecture. The external model 8 also reflects the landscape in which the buildings are located. The external model 8 may cover an area surrounding the building 29 which is sufficient to provide accurate simulation, as will be described in detail below.

The building management system 2 further comprises a weather forecasting module 10. The weather forecasting module 10 is in communication with the climate simulation module 4 and is configured to supply predicted weather data to the climate simulation module 4. The weather data may be provided for the geographical location of the building only or may be more generalised weather data (e.g. for the specific city or country) from which the climate simulation module 4 can determine localised weather for the geographical location of the building. The weather data may cover a relatively short period of less than 1 month or less than 2 weeks. In particular, 1, 3, 5, 7, 10 and 14 day forecasts are common, although the weather data may cover other periods. The weather data may include predictions of one or more of: wind speed, wind direction, ambient temperature, humidity and atmospheric pressure.

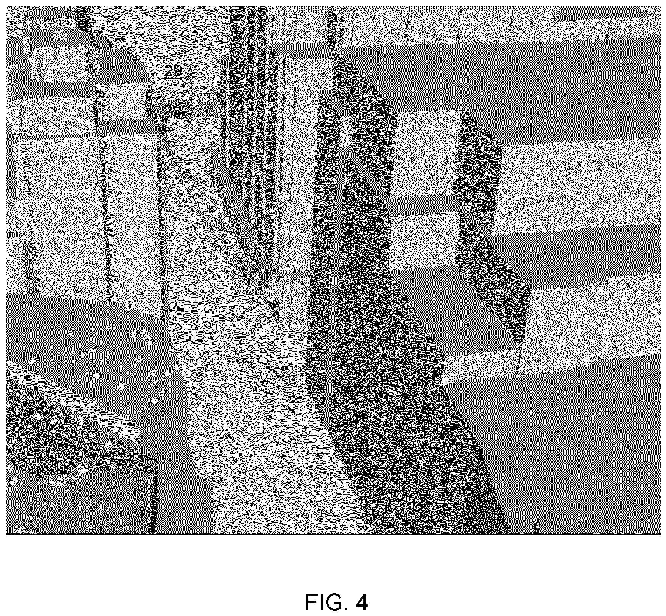

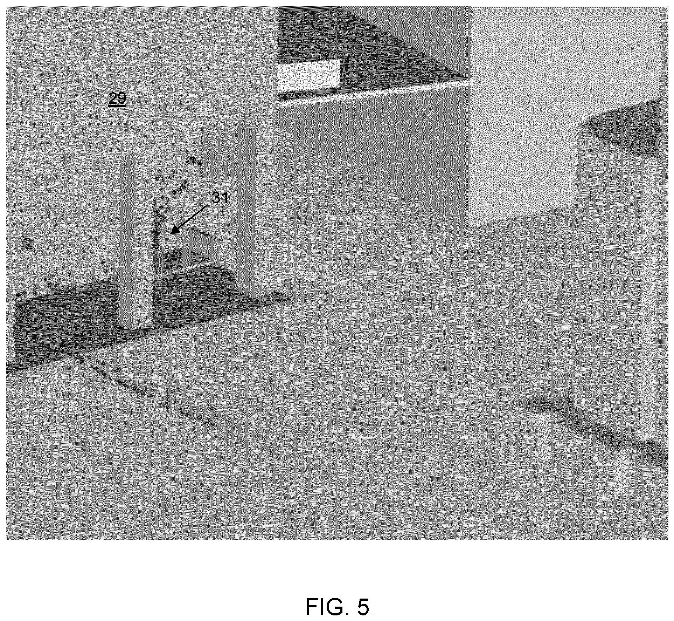

The climate simulation module 4 uses the predicted weather data supplied by the weather forecasting module 10 and the external model 8 to simulate wind movement in the vicinity of the building 29, as shown in Figures 4 and 5. In particular, the climate simulation module 4 uses the wind speed and direction at a given time in the future to determine the wind infiltration into the building 29 through doorways and other entranceways or openings. In the example shown, wind infiltration occurs through a single doorway 31 at the front of the building; although it will be appreciated that in other examples, multiple openings may exist.

The climate simulation module 4 may use footfall data when calculating the wind infiltration into the building 29. In particular, the footfall data may indicate the frequency at which the door of the doorway 31 will be opened, thus allowing airflow to enter the building 29. This may be particularly important for automatic doors which may remain open for significant periods during busy periods and so allow a greater airflow through the doorway when compared with less busy periods.

As shown in Figures 4 and 5, the wind movement is not governed solely by the wind speed and direction and depends largely on the surrounding landscape. The external model 8 must therefore be used to provide an accurate reflection of the wind arriving at the doorway 31.

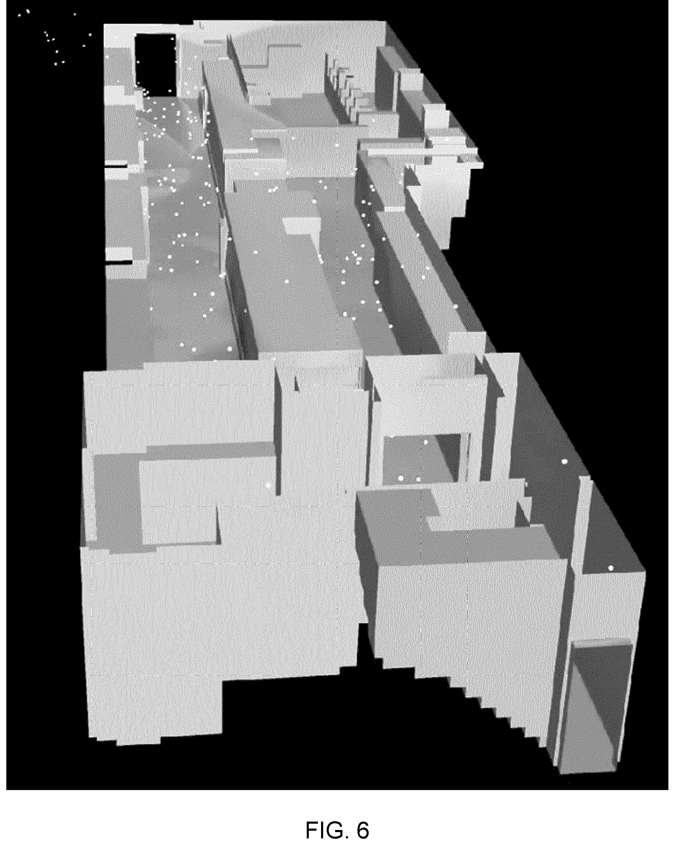

Once the wind infiltration into the building 29 has been determined, the climate simulation module 4 is then able to determine the climate profile within the building 29 based on the wind infiltration into the building (including details regarding the ambient temperature, humidity and/or atmospheric pressure) and the internal model 6. In particular, the structural layout of the building 29 and the elements within it have an effect on the way the air flow passes through the interior of the building 29 and thus leads to variations of the climate within the building 29. Figure 6 shows a simulation of wind movement through the interior of the building 29.

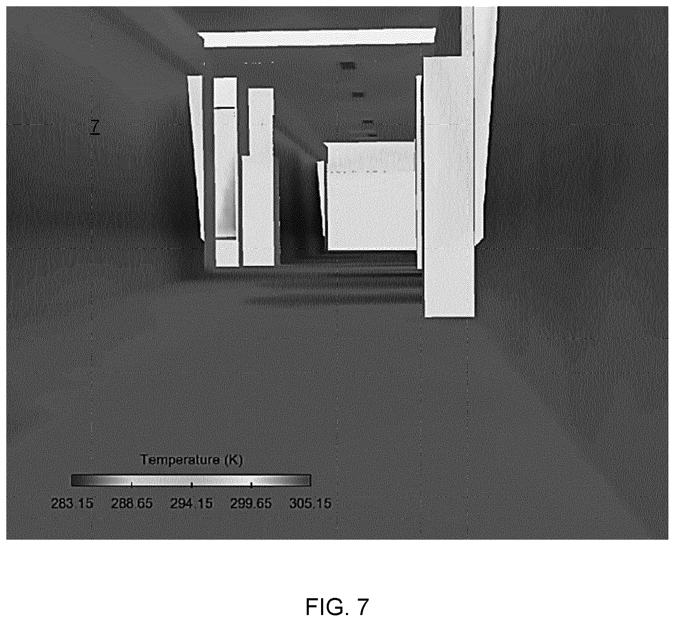

The resulting temperature profile seen from the doorway 31 is shown in Figure 7 which shows the refrigerated cabinets 7 provided within the building 29.

If the incoming air through the doorway 31 is relatively warm, it is necessary for the refrigerated cabinets 7 to work harder in order to maintain the desired temperature within the cabinet. Consequently, this increases the energy consumption of the refrigerated cabinets 7 and, in extreme conditions, may mean that the refrigerated cabinets 7 are unable to provide sufficient cooling load to maintain the desired temperature. This can therefore lead to spoilage of food within the refrigerated cabinets 7 and/or damage to the refrigerated cabinets 7.

The airflow into the building also leads to an increase in the energy consumption of the air conditioning system 9 and other energy consuming components. In particular, the airflow brings with it water vapour which must be removed by the air conditioning system 9 and requires considerable energy to do so.

The building management system 2 further comprises a performance analysis module 12 which is configured to predict a performance characteristic of at least one energy consuming component in the building 29 based on the climate profile predicted by the climate simulation module 4. The energy consuming component may be powered by electric, gas or any other medium and its performance is affected by the climate profile in the building 29 in some way. For example, the performance analysis module 12 may predict the energy consumption of the refrigerated cabinets 7 based on the required cooling load for the climate profile or the cooling load itself.

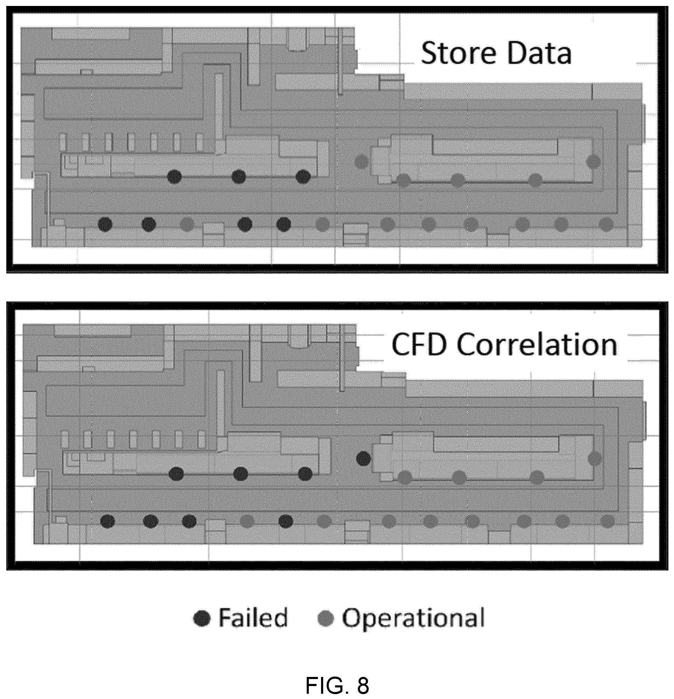

Where the required cooling load exceeds the maximum possible output of one of the refrigerated cabinets 7, the performance analysis module 12 may provide an indication that the refrigerated cabinet 7 is expected to fail (i.e. either developing a fault or simply failing to fulfil its duty). This is depicted in Figure 8 which, in the lower image, shows the predicted status (either "failed" or "operational") for each of the cabinets 7 within the building 29 at a specific time in the future. The upper image shows actual store data for conditions which correspond to the predicted weather data (i.e. at an earlier time or after the predicted weather data has passed). As shown, there is a strong correlation between the predicted status and the actual status. The performance analysis module 12 may have machine learning algorithms which enable the predictions to be improved over time.

The performance analysis module 12 may also monitor the performance of other HVACR (Heating, Ventilation, Air Conditioning and Refrigeration) components. In particular, the performance analysis module 12 may monitor performance characteristics of air conditioning systems in a similar manner to the refrigerated cabinets 7. With air conditioning systems, the performance analysis module 12 may predict energy consumption, cooling load and/or heating load for the climate profile derived from the predicted weather data.

It will be appreciated that the HVACR component may itself contribute to the climate profile and so the internal model 6 of the building 29 may also include settings of the HVACR component which may change over time.

The building management system 2 may further comprise an alert module 14 which is configured to compare the performance characteristic to a predetermined threshold. For example, the alert module 14 may compare the energy consumption, cooling load or heating load to a maximum (permissible or recommended) value. In such circumstances, the alert module 14 is configured to generate an alert (output) providing an advanced warning that the performance characteristic will exceed the threshold at a future time. The alert may include details regarding the time/date that this issue is expected to arise and/or the severity of the issue.

The alert module 14 may be configured to automatically perform mitigating action at a predicted time when the performance characteristic is determined to exceed the maximum performance value. For example, the alert module 14 may be configured to disable the component at a predicted time when the performance characteristic is determined to exceed the maximum performance value in order to avoid damage to the component.

The alert may be displayed on a suitable display which may be formed as part of the building management system 2 or as a separate component. In addition, or instead, the alert (and, optionally, the performance characteristic itself) may be transmitted to a recipient via a communications module 16 (comprising a wired or wireless transmitter) of the building management system 2.

In some examples, the recipient may be an energy supplier of the building 29 and may allow the energy supplier to take pre-emptive action to cope with the surge in demand required at that future time.

In further examples, the recipient may be a maintenance provider for the building 29 and the alert may provide the maintenance provider with a prompt to put in place suitable contingencies. For example, if the alert indicates that a refrigerated cabinet 7 will fail on a certain day in the future, the maintenance provider may take pre-emptive action to prevent this (e.g. servicing the refrigerated cabinet 7 to maximise performance). Alternatively, food may be removed from that cabinet 7 in order to avoid spoilage. The food may be returned to the cabinet at a later point when it is deemed safe to do so.

The alert module 14 may also identify conditions which may lead to slip hazards forming on the floor of the building 29. For example, certain climatic conditions may lead to excessive condensation forming in refrigerated cabinets 7 which may spill onto the floor. This may also happen if the refrigerated cabinets 7 fail. Accordingly, the alert module 14 may highlight this so that action can be taken to avoid accidents.

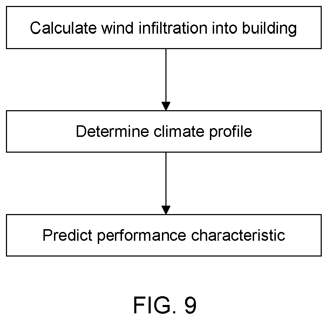

Figure 9 shows a flow chart of a method of managing the operation of at least one energy consuming component in a building. The method may be performed using the building management system 2 described previously.

In a first step, wind infiltration into the building 29 is calculated based on predicted weather data for the geographical location of the building 29 and the external model 8 of the environment surrounding the building. In a second step, a climate profile within the building is determined based on the wind infiltration into the building and the internal model 6 of the building. In a third step, a performance characteristic of the at least one energy consuming component is predicted based on the climate profile.

It will be appreciated that the various modules of the building management system described herein need not be physically separate components and the function of these modules may be provided by a single processor or other circuitry.

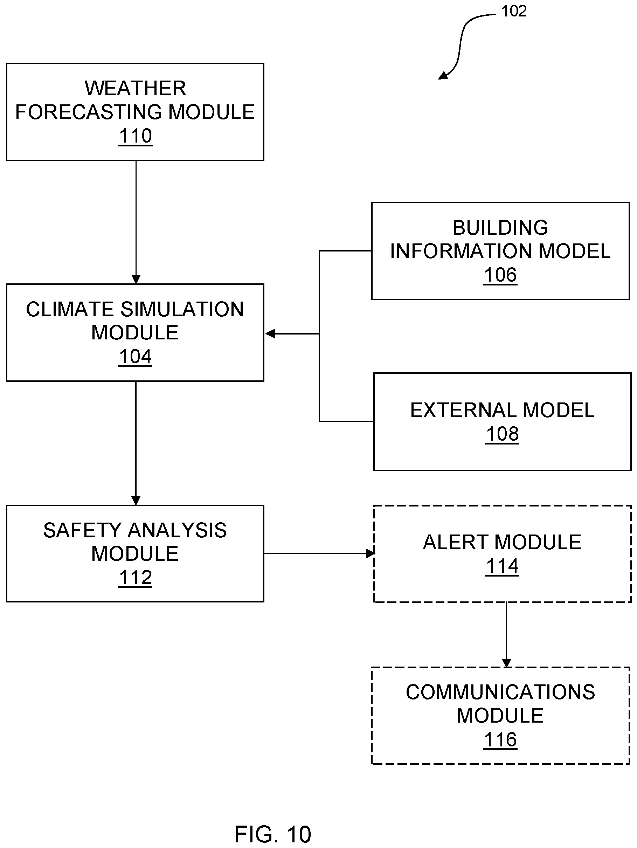

Figure 10 shows a building management system 102 according to another embodiment of the invention. The building management system 102 comprises a climate simulation module 104. The climate simulation module 104 is in communication with a storage medium on which a building information model 106 (or at least data representing a building information model) is stored. The climate simulation module 104 is also in communication with a storage medium (which may be the same storage medium as that described previously) on which an external model 108 (or at least data representing an external model) is stored.

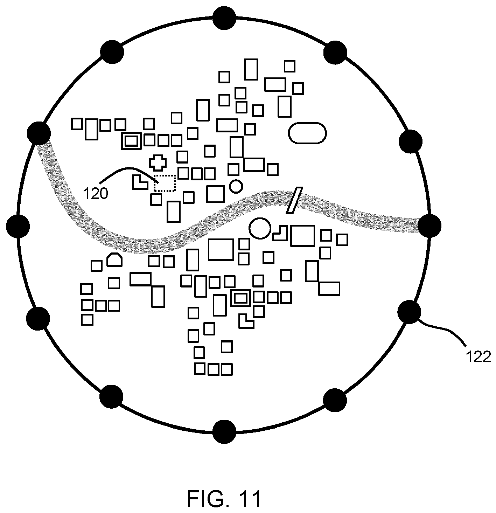

The external model 108 may largely correspond to the external model 8 described previously with respect to the example shown in Figure 3. The model may be of an environment surrounding a location where a building (construction) project is due to take place or is taking place i.e. a building site 120, as shown in the plan view of Figure 11. For example, the construction project may be the construction of a new built asset, such as a building, multiple buildings or other infrastructure such as bridges, etc. (referred to generally herein as a "building"). The construction project may also include external modifications to an existing building. The external model 108 accurately depicts the surrounding buildings and architecture around the building site. The external model 108 also reflects the landscape in which the buildings are located. The external model 108 may cover an area surrounding the building 29 which is sufficient to provide accurate simulation. In some examples, the external model 108 may be of an entire city in which the building site 120 is located. Alternatively, the external model 108 may cover a certain radius or area around the building site 120.

The building information model 106 includes information regarding the construction of the building. In particular, the building information model 106 may include a virtual model of the completed building, as well as a detailed construction sequence which describes or models the progress of the construction over time from start to finish. This may also include information about temporary structures such as surrounding fences, scaffolding, etc. which may have an impact on wind movement. In addition, the building information model 106 may include information regarding structures, such as cranes, used in the construction of the building.

The building management system 102 further comprises a weather forecasting module 110. The weather forecasting module 110 is in communication with the climate simulation module 104 and is configured to supply predicted weather data to the climate simulation module 104. The weather forecasting module 110 may provide weather data in accordance with that described previously with respect to the weather forecasting module 110. In particular, in this example, the weather data includes predictions of wind speed and wind direction. This information may be provided for intervals within a day; for example, over hourly, 30 minute, 15 minute, 5 minute, 1 minute intervals.

The climate simulation module 104 uses the predicted weather data supplied by the weather forecasting module 110 and the external model 108 to simulate wind movement in the vicinity of the building site 120. For example, as shown in Figure 11, the climate simulation module 104 may overlay a plurality of wind points 122 on the external model 108 which correspond to different wind directions. Based on the predicted weather data for a certain time, the climate simulation module 104 can conduct CFD analysis of the wind movement by selecting an appropriate wind point 122. The wind movement experienced at the building site 120 may differ considerably from the general wind conditions forecast by the weather forecasting module 110 as a result of surrounding buildings and their effects on the airflow, particularly resulting from factors such as downwash, vortex shedding, etc. The climate simulation module 104 may repeat this process for each time point of weather data. This analysis may be conducted on a rolling basis or as a batch (e.g. for an upcoming day or week).

The climate simulation module 104 may also utilise the building information model 106 to account for any temporary structures and also to reflect the evolution of the building site 120. In particular, it will be appreciated that as the height of the building increases, it will itself have an impact on the wind movement. The building information model 106 can therefore be used to provide an accurate reflection of the wind movement as the building is constructed. The building information model 106 may be adjusted during the construction process to account for deviations in the building schedule (i.e. where the work is behind or ahead of schedule).

The building management system 102 further comprises a safety analysis module 112 which is configured to assess a safety characteristic associated with the building site 120. In particular, the safety analysis module 112 may compare the wind conditions (e.g. the wind speed and, optionally, the wind direction) predicted for the building site 120 for a given time with a threshold value. If the wind conditions exceed the threshold value, then the safety analysis module 112 determines that it is unsafe to carry out any building work or potentially only certain tasks at that time. For example, the safety analysis module 112 may determine that a crane cannot be used at that time or on that day since the wind conditions mean that it is unsafe to do so. The safety analysis module 112 may obtain information regarding the crane, such as its location and properties, such as height, maximum wind speed for operation, etc. from the building information model 106. It will be appreciated that the height and/or location of the crane may change during the construction project such that the wind conditions experienced at the crane will change. For example, a climbing tower crane is raised as the building becomes taller and so the wind conditions will change over time, potentially significantly. This information can be provided by the building information model 106 so that the safety analysis module 112 is able to correctly assess whether the crane can be used at that future time.

The building management system 102 may further comprise an alert module 114 which is configured to generate an alert (output) providing an advanced warning that the safety characteristic associated with the building site 120 will be unacceptable at a future time. The alert may include details regarding the time/date that this issue is expected to arise and/or the severity of the issue.

The alert module 114 may be configured to automatically perform mitigating action at a predicted time when the safety characteristic is unacceptable. For example, the alert module 114 may be configured to take a crane out of service, for example, by putting it in weather vane mode (where the jib is able to rotate freely so that it points in the direction of the wind) or by lowering it.

The alert may be displayed on a suitable display which may be formed as part of the building management system 102 or as a separate component. In addition, or instead, the alert may be transmitted to a recipient via a communications module 116 (comprising a wired or wireless transmitter) of the building management system 102.

In some examples, the recipient may be a construction project manager or site manager and may allow the manger to take pre-emptive action to cope with the forthcoming conditions. For example, the building site 120 may be closed during periods where the wind conditions are unacceptable or the work being conducted during such periods may be adapted to allow work to continue. In particular, the use of cranes during such periods may be prohibited and the manager may inform crane operatives in advance that they will be unable to work on those days. Accordingly, the building management system 102 may avoid paying operatives on days when they are unable to work. The building information model 106 may be modified based on periods where the wind conditions are unacceptable. For example, the building information model 106 may reschedule certain tasks or adjust a timeline in order to reflect these issues.

Of course, there may be times when the wind conditions are unsafe for certain tasks, but those tasks are not scheduled for those times. Accordingly, the safety analysis module 112 can consult the building information model 106 to determine whether tasks are scheduled for that time which can no longer be performed. Alternatively, the building information model 106 may be used to change the safety threshold over time based on the scheduled tasks for that time.

The building management system 102 may indicate that the safety characteristic is acceptable at times where the wind conditions might suggest otherwise. In particular, as described above, the wind movement experienced at the building site 120 may differ considerably from the general wind conditions which have been forecast and may in fact be more favourable at the building site 120 than predicted. Accordingly, the building management system 102 may indicate that it is safe to work at times when, if a decision was made solely on the weather forecast, work would not be carried out. Accordingly, the building management system 102 may reduce downtime to an absolute minimum.

Although the building management system 102 has been described predominantly with respect to the operation of cranes on a building site, it may also be used to control other actions. In particular, the wind conditions may be determined to be unsafe to permit people to work at height on the building site 120 and so alternative tasks scheduled for such times in order to maximise productivity.

The building management system 102 may also be used after completion of a building to determine whether conditions are suitable for carrying our repair and maintenance tasks. For example, the system 120 could be used to determine if wind conditions were suitable for window cleaners to work.

The building management system 102 may also be used to predict and analyse air quality and determine whether it is safe to work at the site or for work to be carried out at the site. For example, dust (or other air pollution) may be created on site during demolition and construction work and the building management system 102 can predict how that dust will be dispersed (or not). The building management system 102 can therefore use this information to schedule certain tasks for times when wind conditions are suitable to reduce inhalation and/or improve visibility. Further, if the relevant tasks (i.e. those that generate dust or other pollution) cannot be rescheduled, the system 102 may reschedule other tasks in order to minimise the exposure of other personnel to the adverse conditions.

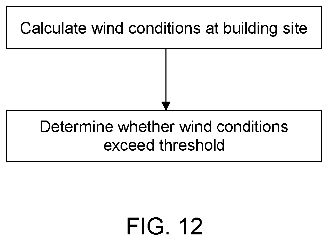

Figure 12 shows a flow chart of a method of managing a building site. The method may be performed using the building management system 102 described previously.

In a first step, predicted wind conditions at a future time at the building site 120 are calculated based on predicted weather data for the geographical location of the building site 120 and the external model 108 of the environment surrounding the building site 120. The building information model 106 may also be used in the calculation of the wind conditions. In a second step, it is determined whether the predicted wind conditions at that time exceed a safety threshold. If the wind conditions do exceed the safety threshold, then mitigating action may be taken. In particular, a crane used on the building site may be taken out of service.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

The invention is not limited to the embodiments described herein, and may be modified or adapted without departing from the scope of the present invention.

## Claims

1. A building management system (2) comprising:
a climate simulation module (4) having access to data representing an internal model (6) of a building and data representing an external model (8) of an environment surrounding the building, wherein the internal model (6) includes at least one energy consuming component installed within the building and having a performance characteristic which is influenced by a climate within the building; and
a weather forecasting module (10) for supplying predicted weather data for the geographical location of the building to the climate simulation module (4);
wherein the climate simulation module (4) is configured to calculate wind infiltration into the building based on the predicted weather data and the external model (8) and to determine a climate profile within the building based on the wind infiltration into the building and the internal model (6) of the building;
wherein the system further comprises a performance analysis module (12) which is configured to predict the performance characteristic of the at least one energy consuming component based on the climate profile.

2. A building management system (2) as claimed in claim 1, wherein the weather data includes one or more of: wind speed, wind direction, ambient temperature, humidity and atmospheric pressure.

3. A building management system (2) as claimed in claim 1 or 2, wherein the climate profile comprises a temperature profile within the building;
and optionally:
wherein the climate profile further comprises humidity within the building.

4. A building management system (2) as claimed in any preceding claim, further comprising an alert module (14) configured to compare the performance characteristic to a predetermined threshold and to generate an output providing an advanced warning that the performance characteristic will exceed or fall below the threshold at a future time.

5. A building management system (2) as claimed in claim 4, wherein the predetermined threshold is a maximum performance value of the at least one energy consuming component;
and optionally:
wherein the alert module (14) is configured to automatically perform mitigating action at a predicted time when the performance characteristic is determined to exceed the maximum performance value;
and optionally:
wherein the alert module (14) is configured to disable the at least one energy consuming component at a predicted time when the performance characteristic is determined to exceed the maximum performance value.

6. A building management system (2) as claimed in claim 4 or 5, further comprising a communications module (16) which transmits the performance characteristic and/or output from the alert module (14) to a recipient;
and optionally:
wherein the recipient is an energy supplier of the building and/or a maintenance provider.

7. A building management system (2) as claimed in any preceding claim, wherein the at least one energy consuming component comprises at least one HVACR component.

8. A building management system (2) as claimed in claim 7, wherein the performance characteristic comprises an energy consumption, a cooling load or a heating load of the at least one HVACR component.

9. A building management system (2) as claimed in claim 7 or 8, wherein the at least one HVACR component is a refrigerated display case (7) and/or components of a HVAC system installed in the building.

10. A building management system (2) as claimed in any of claims 7 to 9, wherein the internal model (6) of the building includes settings of the at least one HVACR component which contribute to the climate profile.

11. A building management system (2) as claimed in any preceding claim, wherein the internal model (6) and/or external model (8) comprises a CFD model.

12. A building management system (2) as claimed in any preceding claim, wherein the climate simulation module (4) utilises footfall data when calculating wind infiltration into the building.

13. A method of managing the operation of at least one energy consuming component in a building, the method comprising:
calculating wind infiltration into the building based on predicted weather data for the geographical location of the building and an external model (8) of the environment surrounding the building;
determining a climate profile within the building based on the wind infiltration into the building and an internal model (6) of the building; and
predicting a performance characteristic of the at least one energy consuming component based on the climate profile.

## Patentansprüche

1. Gebäudeverwaltungssystem (2), das Folgendes umfasst:
ein Klimasimulationsmodul (4) mit Zugriff auf Daten, die ein internes Modell (6) eines Gebäudes repräsentieren, und Daten, die ein externes Modell (8) einer Umgebung, die das Gebäude umgibt, repräsentieren, wobei das interne Modell (6) mindestens eine energieverbrauchende Komponente beinhaltet, die innerhalb des Gebäudes installiert ist und ein Leistungsmerkmal aufweist, das durch ein Klima innerhalb des Gebäudes beeinflusst wird; und
ein Wettervorhersagemodul (10) zum Liefern vorhergesagter Wetterdaten für den geografischen Standort des Gebäudes an das Klimasimulationsmodul (4);
wobei das Klimasimulationsmodul (4) dazu ausgelegt ist, eine Windinfiltration in das Gebäude basierend auf den vorhergesagten Wetterdaten und dem externen Modell (8) zu berechnen und ein Klimaprofil innerhalb des Gebäudes basierend auf der Windinfiltration in das Gebäude und dem internen Modell (6) des Gebäudes zu bestimmen;
wobei das System ferner ein Leistungsanalysemodul (12) umfasst, das dazu ausgelegt ist, das Leistungsmerkmal der mindestens einen energieverbrauchenden Komponente basierend auf dem Klimaprofil vorherzusagen.

2. Gebäudeverwaltungssystem (2) nach Anspruch 1, wobei die Wetterdaten einen oder mehrere der folgenden Punkte beinhalten: Windgeschwindigkeit, Windrichtung, Umgebungstemperatur, Luftfeuchtigkeit und Atmosphärendruck.

3. Gebäudeverwaltungssystem (2) nach Anspruch 1 oder 2, wobei das Klimaprofil ein Temperaturprofil innerhalb des Gebäudes umfasst;
und optional:
wobei das Klimaprofil ferner die Luftfeuchtigkeit innerhalb des Gebäudes umfasst.

4. Gebäudeverwaltungssystem (2) nach einem der vorhergehenden Ansprüche, ferner umfassend ein Warnmodul (14), das dazu ausgelegt ist, das Leistungsmerkmal mit einer vorbestimmten Schwelle zu vergleichen und eine Ausgabe zu erzeugen, die eine erweiterte Warnung bereitstellt, dass das Leistungsmerkmal die Schwelle zu einem zukünftigen Zeitpunkt überschreitet oder unter diese fällt.

5. Gebäudeverwaltungssystem (2) nach Anspruch 4, wobei die vorbestimmte Schwelle ein maximaler Leistungswert der mindestens einen energieverbrauchenden Komponente ist; und optional:
wobei das Warnmodul (14) dazu ausgelegt ist, automatisch eine Abschwächungsaktion zu einem vorhergesagten Zeitpunkt durchzuführen, zu dem bestimmt wird, dass das Leistungsmerkmal den maximalen Leistungswert überschreitet;
und optional:
wobei das Warnmodul (14) dazu ausgelegt ist, die mindestens eine energieverbrauchende Komponente zu einem vorhergesagten Zeitpunkt zu deaktivieren, zu dem bestimmt wird, dass das Leistungsmerkmal den maximalen Leistungswert überschreitet.

6. Gebäudeverwaltungssystem (2) nach Anspruch 4 oder 5, ferner umfassend ein Kommunikationsmodul (16), das das Leistungsmerkmal und/oder die Ausgabe von dem Warnmodul (14) an einen Empfänger überträgt;
und optional:
wobei der Empfänger ein Energieversorger des Gebäudes und/oder ein Wartungsdienstleister ist.

7. Gebäudeverwaltungssystem (2) nach einem der vorhergehenden Ansprüche, wobei die mindestens eine energieverbrauchende Komponente mindestens eine HVACR-Komponente umfasst.

8. Gebäudeverwaltungssystem (2) nach Anspruch 7, wobei das Leistungsmerkmal einen Energieverbrauch, eine Kühllast oder eine Heizlast der mindestens einen HVACR-Komponente umfasst.

9. Gebäudeverwaltungssystem (2) nach Anspruch 7 oder 8, wobei die mindestens eine HVACR-Komponente einen gekühlten Schaukasten (7) und/oder Komponenten eines in dem Gebäude installierten HVAC-Systems ist.

10. Gebäudeverwaltungssystem (2) nach einem der Ansprüche 7 bis 9, wobei das interne Modell (6) des Gebäudes Einstellungen der mindestens einen HVACR-Komponente beinhaltet, die zu dem Klimaprofil beitragen.

11. Gebäudeverwaltungssystem (2) nach einem der vorhergehenden Ansprüche, wobei das interne Modell (6) und/oder das externe Modell (8) ein CFD-Modell umfasst.

12. Gebäudeverwaltungssystem (2) nach einem der vorhergehenden Ansprüche, wobei das Klimasimulationsmodul (4) Fußfalldaten verwendet, wenn eine Windinfiltration in das Gebäude berechnet wird.

13. Verfahren zum Verwalten des Betriebs mindestens einer energieverbrauchenden Komponente in einem Gebäude, wobei das Verfahren Folgendes umfasst:
Berechnen der Windinfiltration in das Gebäude auf der Grundlage vorhergesagter Wetterdaten für den geografischen Standort des Gebäudes und eines externen Modells (8) der Umgebung des Gebäudes;
Bestimmen eines Klimaprofils innerhalb des Gebäudes basierend auf der Windinfiltration in das Gebäude und einem internen Modell (6) des Gebäudes; und
Vorhersagen eines Leistungsmerkmals der mindestens einen energieverbrauchenden Komponente basierend auf dem Klimaprofil.

## Revendications

1. Système de gestion de bâtiment (2), comprenant :
un module de simulation de climat (4) ayant accès à des données représentant un modèle interne (6) d'un bâtiment et à des données représentant un modèle externe (8) d'un environnement entourant le bâtiment, dans lequel le modèle interne (6) inclut au moins un composant consommateur d'énergie installé à l'intérieur du bâtiment et ayant une caractéristique de performance qui est influencée par un climat à l'intérieur du bâtiment ; et
un module de prévision météorologique (10) pour fournir des données météorologiques prédites pour la localisation géographique du bâtiment au module de simulation de climat (4) ;
dans lequel le module de simulation de climat (4) est configuré pour calculer une infiltration du vent dans le bâtiment sur la base des données météorologiques prédites et du modèle externe (8) et pour déterminer un profil de climat à l'intérieur du bâtiment sur la base de l'infiltration du vent dans le bâtiment et du modèle interne (6) du bâtiment ;
dans lequel le système comprend en outre un module d'analyse de performance (12) qui est configuré pour prédire la caractéristique de performance de l'au moins un composant consommateur d'énergie sur la base du profil de climat.

2. Système de gestion de bâtiment (2) tel que revendiqué dans la revendication 1, dans lequel les données météorologiques incluent un ou plusieurs paramètres parmi : la vitesse du vent, la direction du vent, la température ambiante, l'humidité, et la pression atmosphérique.

3. Système de gestion de bâtiment (2) tel que revendiqué dans la revendication 1 ou 2, dans lequel le profil de climat comprend un profil de température à l'intérieur du bâtiment ;
et facultativement :
dans lequel le profil de climat comprend en outre l'humidité à l'intérieur du bâtiment.

4. Système de gestion de bâtiment (2) tel que revendiqué dans une quelconque revendication précédente, comprenant en outre un module d'alerte (14) configuré pour comparer la caractéristique de performance à un seuil prédéterminé et pour générer une sortie fournissant un avertissement avancé que la caractéristique de performance dépassera le seuil, ou sera inférieure à celui-ci, à un instant futur.

5. Système de gestion de bâtiment (2) tel que revendiqué dans la revendication 4, dans lequel le seuil prédéterminé est une valeur de performance maximum de l'au moins un composant consommateur d'énergie ;
et facultativement :
dans lequel le module d'alerte (14) est configuré pour réaliser automatiquement une action atténuante à un instant prédit lorsqu'il est déterminé que la caractéristique de performance dépasse la valeur de performance maximum ;
et facultativement :
dans lequel le module d'alerte (14) est configuré pour désactiver l'au moins un composant consommateur d'énergie à un instant prédit lorsqu'il est déterminé que la caractéristique de performance dépasse la valeur de performance maximum.

6. Système de gestion de bâtiment (2) tel que revendiqué dans la revendication 4 ou 5, comprenant en outre un module de communication (16) qui transmet la caractéristique de performance et/ou la sortie depuis le module d'alerte (14) à un destinataire ;
et facultativement :
dans lequel le destinataire est un fournisseur d'énergie du bâtiment et/ou un fournisseur d'entretien.

7. Système de gestion de bâtiment (2) tel que revendiqué dans une quelconque revendication précédente, dans lequel l'au moins un composant consommateur d'énergie comprend au moins un composant HVACR.

8. Système de gestion de bâtiment (2) tel que revendiqué dans la revendication 7, dans lequel la caractéristique de performance comprend une consommation d'énergie, une charge de refroidissement, ou une charge de chauffage de l'au moins un composant HVACR.

9. Système de gestion de bâtiment (2) tel que revendiqué dans la revendication 7 ou 8, dans lequel l'au moins un composant HVACR est une vitrine réfrigérée (7) et/ou des composants d'un système HVAC installé dans le bâtiment.

10. Système de gestion de bâtiment (2) tel que revendiqué dans de quelconques des revendications 7 à 9, dans lequel le modèle interne (6) du bâtiment inclut des réglages de l'au moins un composant HVACR qui contribuent au profil de climat.

11. Système de gestion de bâtiment (2) tel que revendiqué dans une quelconque revendication précédente, dans lequel le modèle interne (6) et/ou le modèle externe (8) comprennent un modèle CFD.

12. Système de gestion de bâtiment (2) tel que revendiqué dans une quelconque revendication précédente, dans lequel le module de simulation de climat (4) utilise des données des données de fréquentation lors du calcul de l'infiltration du vent dans le bâtiment.

13. Procédé de gestion du fonctionnement d'au moins un composant consommateur d'énergie dans un bâtiment, le procédé comprenant :
le calcul d'une infiltration du vent dans le bâtiment sur la base de données météorologiques prédites pour la localisation géographique du bâtiment et d'un modèle externe (8) de l'environnement entourant le bâtiment ;
la détermination d'un profil de climat à l'intérieur du bâtiment sur la base de l'infiltration du vent dans le bâtiment et d'un modèle interne (6) du bâtiment ; et
la prédiction d'une caractéristique de performance de l'au moins un composant consommateur d'énergie sur la base du profil de climat.
